# EUROPÄISCHE PATENTANMELDUNG

(11) **EP 1 245 347 A1**
(43) Veröffentlichungstag der Anmeldung: **02.10.2002**
(21) Anmeldenummer: 02006354.1
(22) Anmeldetag: 21.03.2002
(51) Int. Cl.: B25J 15/02, B65G 47/90, B23Q 7/04, B25J 15/00, B66C 1/28

(54) **Fernbedienbare Lastaufnahmevorrichtung mit parallelen Greiferbacken**

(30) Priorität: 26.03.2001 DE 10114904
(71) Anmelder: Forschungszentrum Jülich GmbH, 52425 Jülich (DE)
(72) Erfinder: Matela, Karel, 52379 Langewehe (DE)
(74) Vertreter: Jostarndt, Hans-Dieter

(57) **Zusammenfassung**

Die Erfindung betrifft eine fernbedienbare Vorrichtung zum Greifen und Aufnehmen von Lasten verschiedener Formen, Gewichte und Werkstoffe.

Erfindungsgemäß zeichnet sich die Vorrichtung dadurch aus, dass ein bewegbares Gestänge (10) über wenigstens zwei scherenförmig positionierte Arme (20) mit wenigstens zwei Greifbacken (30) verbunden ist, wobei durch ein krafterzeugendes Mittel eine Zugkraft auf das Gestänge (10) übertragbar ist.

## Beschreibung

Die Erfindung betrifft eine fernbedienbare Vorrichtung zum Greifen und Aufnehmen von Lasten verschiedener Formen, Gewichte und Werkstoffe.

In verschiedenen technischen Einsatzgebieten besteht der Bedarf, Eingriffe und Montagearbeiten an schwer zugänglichen Orten vorzunehmen. Insbesondere bei Betrieb und Forschungseinsatz von Kernreaktoren ist es notwendig, radioaktive Bauteile der Tankeinbauten des Reaktors aus dem Reaktor zu entfernen. Zu diesem Zweck verwendete Vorrichtungen müssen fernbedienbar und dazu in der Lage sein, Lasten verschiedener Formen, Gewichte und Werkstoffe zu greifen und über eine Entfernung von mehreren Metern sicher zu bewegen. Die mit der Vorrichtung aufzunehmenden Abbauteile wiegen typischerweise 100 kg und befinden sich etwa 5 m unter Wasser. Da die vorhandenen Einbauverhältnisse im Reaktor sehr eng sind, ist eine möglichst kompakte Bauweise der Vorrichtung erforderlich. Außerdem müssen die mit der Vorrichtung aufgenommenen Bauteile bei Bedarf mit einem Kran in bereitgestellte Abfallfässer verladen werden können. Deshalb muss die Konstruktion und die Ausführung der Vorrichtung besonderen Anforderungen genügen.

Zur Aufnahme von Lasten sind unterschiedliche Einrichtungen bekannt, zu denen vor allem verschiedene Ausführungsformen von Greifern zählen. Verwendet werden beispielsweise Greifer mit Magneten oder Saugvorrichtungen und Greifer, die auf dem Scherenprinzip basieren, bei dem über scherenförmig angeordnete Bauteile Kraft auf Greifbacken übertragen wird.

Die Greifbacken können dabei als Haken ausgebildet sein, die unter aufzunehmende Lasten greifen oder in die Lasten eingreifen. Darüber hinaus ist es möglich, über die Greifbacken Anpresskräfte auf die Lasten aufzubringen, so dass die Lasten durch Reibung gehalten werden. Greifer, die so ausgelegt sind, dass sie große Lasten aufnehmen können, besitzen vor allem in der Breite große Abmessungen und sind so konzipiert, dass der Mechanismus, der die Greifbewegung und die Anpresskräfte des Greifers auslöst, vom Anwender in der Nähe des jeweiligen Greifwerkzeugs betätigt wird.

Aufgabe der Erfindung ist es, eine Vorrichtung bereitzustellen, mit der sich Lasten verschiedener Formen, Gewichte und Werkstoffe aufnehmen und bewegen lassen. Insbesondere soll die Vorrichtung auch in Umgebungen mit engen Abmessungen und/oder größeren Entfernungen zu der Last einsetzbar sein. Vorzugsweise liegt die Entfernung zu der Last in der Größenordnung von einem oder mehreren Metern,.

Erfindungsgemäß wird diese Aufgabe dadurch gelöst, dass die Bewegung eines Gestänges über mehrere scherenförmig angeordnete Arme auf zwei Greifbacken geleitet wird, die sich dadurch aufeinander zu- oder voneinander wegbewegen lassen. Durch diese Bewegung und verschiedene Formen von Greifbacken können unterschiedliche Lasten erfasst und gegriffen werden. Die Bewegung des Gestänges erfolgt in einer besonders bevorzugten Ausführungsform der Erfindung durch Drehen einer verlängerten Mutter auf einer Gewindestange, die fest mit dem Gestänge verbunden ist.

Die erforderliche Anpresskraft um Lasten durch Reibung zwischen den Greifbacken zu halten und sie mit der Vorrichtung zu bewegen, wird dadurch aufgebracht, dass ein krafterzeugendes Mittel Zugkraft auf das Gestänge ausübt. In einer besonders bevorzugten Ausführungsform der Erfindung handelt es sich bei dem krafterzeugenden Mittel um eine Feder. Die Feder ist vorzugsweise zwischen einem Anschlag in Form zweier Platten und der Mutter angebracht und umgibt die Gewindestange. Die erforderliche Anpresskraft wird erst dann vollständig auf die Greifbacken übertragen, wenn die Mutter bis zu einem weiteren Anschlag gedreht wurde. Dieser Anschlag und die Mutter befinden sich an einem Ende von zwei U-Trägern, die sich mit ihren offenen Seiten gegenüber liegen und so den Innenraum der Greifvorrichtung bilden. Die Gewindestange, die Feder mit den zwei Platten und das Gestänge verlaufen in diesem Innenraum. Der Anschlag ist fest mit einem Ende der U-Träger verbunden. Die Arme sind beweglich mit dem anderen Ende der U-Träger und dem Gestänge verbunden. Ebenfalls an diesem Ende der U-Träger sind die Greifbacken befestigt. Die Greifbacken können unterschiedlich ausgeführt sein und je nach Anwendung ausgewechselt werden.

Die U-Träger sind ebenso wie das Gestänge, das in ihnen geführt wird, mehrere Meter lang. Durch die lange Ausführung der Vorrichtung können also auf große Entfernung Lasten aufgenommen werden. Die Betätigung des Greifers erfolgt über das Drehen der Mutter an einem Ende der langen Vorrichtung, während die Greifbacken am anderen Ende der Vorrichtung die Lasten erfassen und bewegen, so dass die Greifvorrichtung fernbedienbar ist.

Der Querschnitt der Vorrichtung hat vorzugsweise Abmessungen in der Größenordnung von 2 bis 20 cm und ist daher verglichen mit ihrer Länge von mehreren Metern sehr schmal. Die erfindungsgemäße Lastaufnahmevorrichtung eignet sich daher zur Aufnahme von Bauteilen in Umgebungen mit engen Abmessungen, wie sie beispielsweise in Kernreaktoren zu Forschungszwecken gegeben sind.

Die erfindungsgemäße Lastaufnahmevorrichtung hat gegenüber bekannten Greifvorrichtungen weitere Vorteile. Sie kann Lasten aus unterschiedlichen Werkstoffen aufnehmen, wozu beispielsweise Greifer, die mit Magneten arbeiten, nicht in der Lage sind. Diese können nur magnetische Werkstoffe aufnehmen, was eine erhebliche Einschränkung der Anwendungsmöglichkeiten bedeutet. Die erfindungsgemäße Vorrichtung kann außerdem bei Verwendung von geeigneten Werkstoffen und Beschichtungen zur Aufnahme von Lasten in Wasser oder anderen Flüssigkeiten verwendet werden.

Die Erfindung wird nachfolgend anhand von Zeichnungen näher erläutert:
**Fig.1** zeigt einen Querschnitt durch eine Ausführungsform der erfindungsgemäßen Lastaufnahmevorrichtung.
**Fig.2** zeigt die Untersicht einer Ausführungsform der erfindungsgemäßen Lastaufnahmevorrichtung.
**Fig.3** zeigt die Greifbacken der Lastaufnahmevorrichtung in einer offenen Stellung.
**Fig.4** zeigt die Greifbacken der Lastaufnahmevorrichtung in einer geschlossenen Stellung.

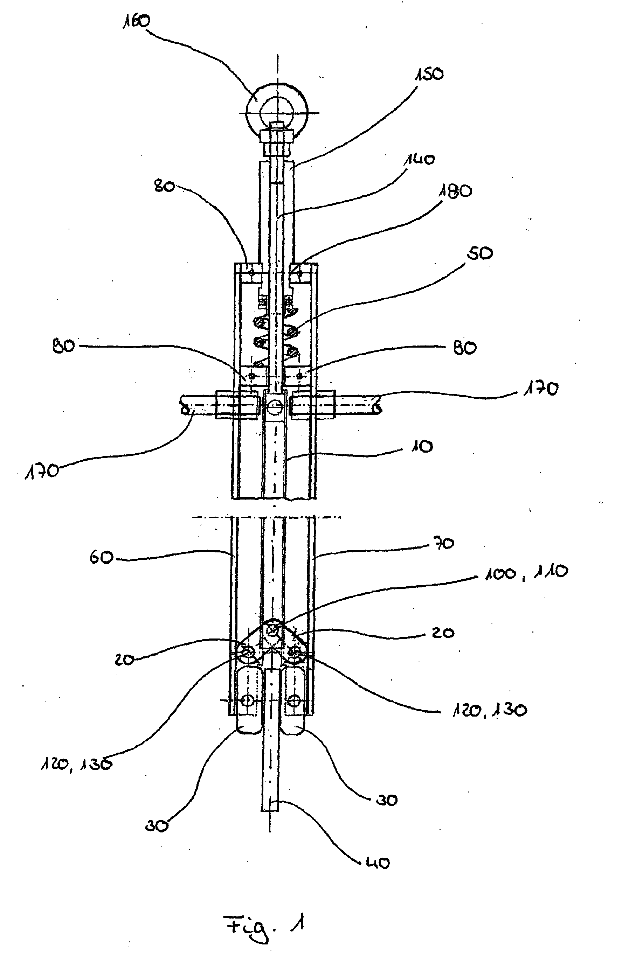

In **Fig.1** ist ein Querschnitt durch eine besonders bevorzugte Ausführungsform der erfindungsgemäßen Lastaufnahmevorrichtung dargestellt. Die Vorrichtung basiert auf dem Prinzip, dass die Bewegung eines Gestänges 10 über mehrere Arme 20 auf wenigstens zwei Greifbacken 30 geleitet wird, die sich dadurch aufeinander zu- oder voneinander wegbewegen lassen. Die notwendige Anpresskraft zum Halten einer Last 40 durch Reibung wird dadurch bereitgestellt, dass ein krafterzeugendes Mittel eine Zugkraft auf das Gestänge 10 überträgt. Bei dem krafterzeugenden Mittel handelt es sich vorzugsweise um eine Feder 50, insbesondere um eine Druckfeder. Um die Anpresskraft dauerhaft und sicher bereitzustellen, hat es sich als zweckmäßig erwiesen, dass die Feder vorgespannt ist.

Die Vorrichtung besteht aus zwei U-Trägern 60 und 70, die sich mit ihren offenen Seiten gegenüberliegen. Die U-Träger bilden so den Innenraum der Vorrichtung, in den vorzugsweise das Gestänge 10, die Arme 20, die Greifbacken 30, die Feder 50, ein Anschlag 80, zwei quer zur Längsachse der Vorrichtung verlaufende Platten 90, eine Gewindestange 140 und weitere Elemente eingebracht sind. Es hat sich als zweckmäßig erwiesen, dass das Gestänge 10 aus einem Rohr mit rundem oder eckigem Querschnitt gebildet wird. In dieser bevorzugten Ausführungsform der Erfindung werden als Arme 20 vier längliche an den Ecken abgerundete Platten verwendet, die jeweils zwei Bohrungen aufweisen. Die Verbindung der Arme 20 mit dem Gestänge 10 und den U-Trägern 60 und 70 ist beweglich ausgeführt. Dazu sind die Arme über eine Bohrung 100 und einen Stift 110 mit dem Gestänge verbunden, während sie über die andere Bohrung 120 und einen weiteren Stift 130 mit je einem der U-Träger 60 oder 70 verbunden sind. Die Stifte 110 und 130 werden vorzugsweise durch Simmerringe fixiert. Statt einer Stiftverbindung können auch andere bewegliche Verbindungsarten gewählt werden.

Die Greifbacken 30 sind ebenfalls mit je einem der U-Träger 60 oder 70 verbunden. Damit für die verschiedenen Anwendungen unterschiedliche Greifbacken verwendet werden können, ist diese Verbindung vorzugsweise lösbar ausgeführt. Es kann sich dabei beispielsweise um eine Schraub- oder Stiftverbindung handeln. Bei den Greifbacken handelt es sich vorzugsweise um quaderförmige Bauteile, deren Material und Oberflächenbeschaffenheit sich gut zum Aufbringen von Anpresskräften auf Objekte eignet. Um den Reibungskoeffizienten der Backenflächen zu erhöhen, können die Greifbacken zusätzlich mit Querriefen versehen sein. Zweckmäßig sind weiterhin Greifbacken in Hakenform, die in Öffnungen und Aussparungen in den Lasten eingreifen.

An dem von den Greifbacken wegweisenden Ende des Gestänges 10 schließt eine Gewindestange 140 an, die fest mit dem Gestänge verbunden ist. Auf die Gewindestange ist eine verlängerte Mutter 150 geschraubt. Die Mutter 150 ist durch eine Nut 180 in den Anschlag 80 eingebracht, der fest mit den beiden U-Trägern 70 verbunden ist. Zwischen diesem Anschlag 80 mit der Mutter 150 und zwei Platten 90 befindet sich eine Feder 50, welche die Gewindestange 140 umgibt.

Um die gesamte Vorrichtung an einen Kran hängen zu können, hat es sich als besonders zweckmäßig erwiesen, eine Augenmutter 160 auf das freie Ende der Gewindestange 140 zu schrauben. Möglich sind aber auch andere Formen der Aufhängung. In dieser besonders bevorzugten Ausführungsform der Erfindung sind außen an den U-Trägern wenigstens zwei Stangen 170 vorgesehen, die eine manuelle Bewegung und Fixierung der gesamten Vorrichtung ermöglichen. Es können auch Griffe oder sonstige Vorrichtungen vorgesehen sein, die die genannten Anforderungen erfüllen.

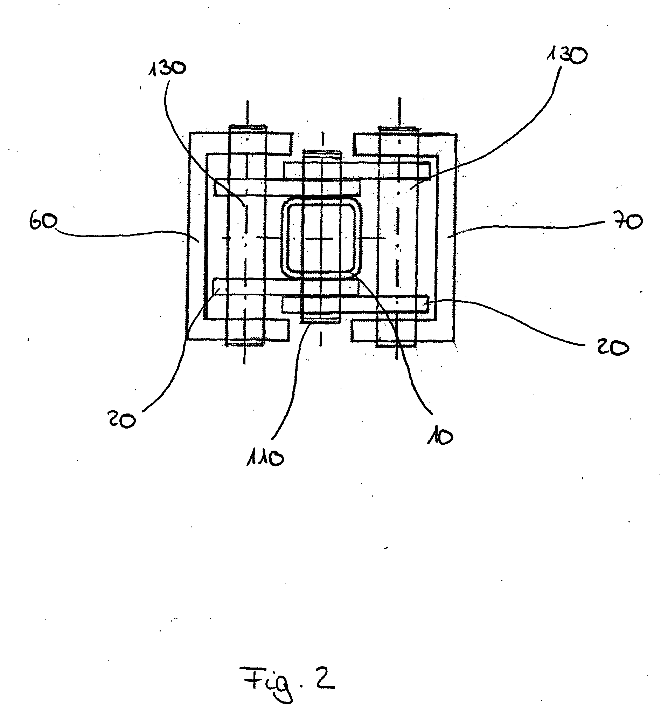

In **Fig.2** ist eine Untersicht der Ausführungsform aus **Fig.1** dargestellt, in der die Anordnung und die beweglichen Verbindungen der plattenförmigen Arme 20 zu sehen ist. In dieser besonders bevorzugten Ausführungsform der Erfindung werden durch den Stift 110 auf zwei Seiten des Gestänges 10 jeweils zwei Arme befestigt. Die beiden Stifte 130 verbinden die Arme 20 mit jeweils einem der U-Träger 60 oder 70. Da die U-Träger wiederum fest mit den Greifbacken 30 verbunden sind, ist so eine bewegliche Verbindung des Gestänges mit den Greifbacken hergestellt.

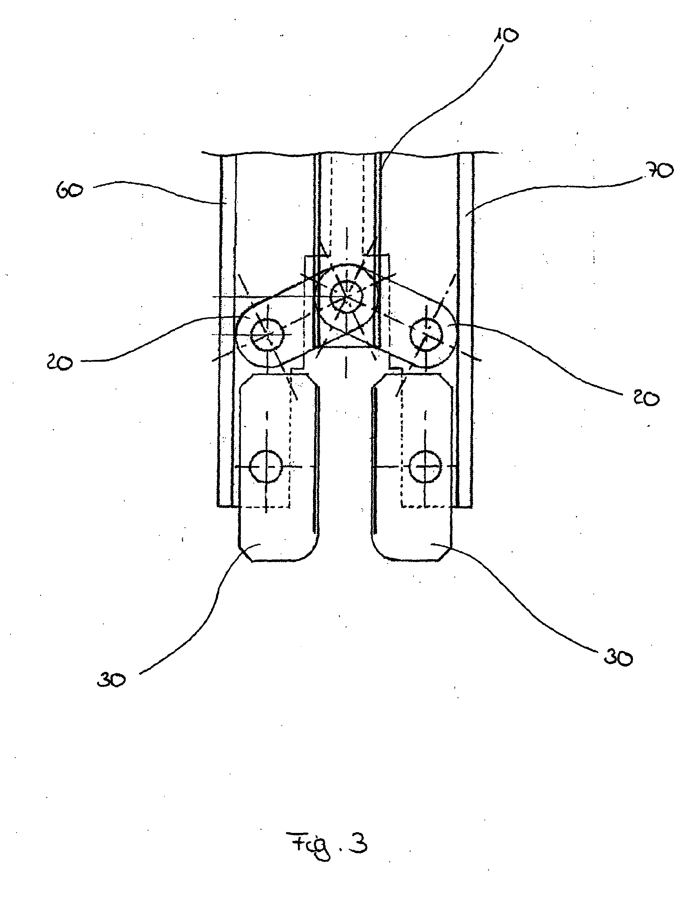

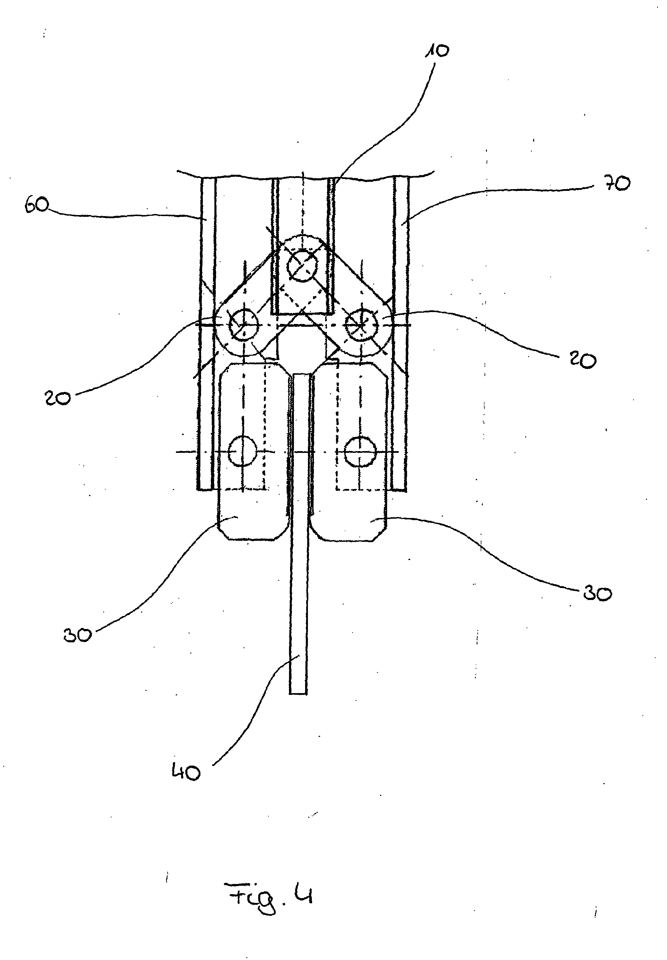

Erfolgt nun eine Bewegung des Gestänges 10, wird diese Bewegung direkt auf die Greifbacken geleitet. Die sich daraus ergebenden Positionen der Greifbacken sind in **Fig.3** und **Fig.4** dargestellt. **Fig.3** zeigt die Greifbacken 30 in einer offenen Stellung, da sich das Gestänge 10 an einem tiefen Punkt befindet. Die Arme 20 scheren dadurch auseinander und drücken die U-Träger 60 und 70 mit den Greifbacken 30 nach außen. In dieser Stellung können Lasten angesteuert und umfasst werden.

**Fig.4** zeigt die Greifbacken 30 in einer geschlossenen Stellung, in der sie eine Last 40 aufgenommen haben. Das Gestänge 10 befindet sich an einem hohen Punkt, wodurch sich der Winkel zwischen den Armen gegenüber der Stellung in **Fig.3** verringert hat und die Greifbacken an den U-Trägern haben sich aufeinander zu bewegt. Die U-Träger 60 und 70 können sich aufgrund ihrer Elastizität im Bereich der Greifbacken ausreichend öffnen und die vorhandenen Knickungskräfte, die durch die Bewegung des Gestänges auftreten, aufnehmen.

Die Bewegung des Gestänges erfolgt dabei durch Drehen der Mutter 150 auf der Gewindestange 140. In dieser bevorzugten Ausführungsform der Erfindung sind die Mutter und die Gewindestange so ausgebildet, dass sich die Gewindestange mit dem Gestänge zur Mutter hin bewegt, wenn diese im Uhrzeigersinn gedreht wird. Um eine offene Stellung der Greifbacken wie in **Fig.3** zu erreichen, muss die Mutter also so lange gegen den Uhrzeigersinn gedreht werden, bis die Greifbacken soweit auseinander stehen, dass ein Objekt umfasst werden kann. In dieser Stellung nimmt die Mutter ihre höchste Position ein und steht so, dass ihre Nut 180 von unten den Anschlag 80 berührt. Die Aufnahmevorrichtung wird nun mit Hilfe der Stangen 170 so positioniert, dass die Greifbacken 30 das Objekt 40 umfassen und greifen können. Zum Zusammenführen der Greifbacken wird nun die Mutter im Uhrzeigersinn gedreht. Das Drehen der Mutter kann per Hand, mit einem Schraubschlüssel oder motorgetrieben erfolgen. Damit sich die gesamte Vorrichtung nicht mit der Mutter dreht, kann sie wiederum an den Stangen 170 festgehalten werden. Es sind auch andere Vorrichtungen möglich, die diesen Zweck erfüllen.

Ist das Objekt 40 von den Greifbacken 30 erfasst, kann die erforderliche Anpresskraft aufgebracht werden. Das Gestänge 10 und die Gewindestange 140 können sich nach Aufnahme der Last 40 nicht weiter nach oben bewegen, da die Greifbacken sich nicht weiter aufeinander zu bewegen können. Wird die Mutter 150 ab diesem Punkt weiter festgedreht, bewegt sie sich so lange nach unten, bis ihre Nut 180 von oben den Anschlag 80 berührt. Diese Position der Mutter 150 ist in **Fig.1** dargestellt. Das Gestänge 10 mit der Gewindestange 140 kann sich in dieser Stellung nicht weiter nach oben bewegen, während sich die Mutter 150 nicht weiter nach unten bewegen kann. Die Vorrichtung ist so ausgelegt, dass die Druckfeder 50 in dieser Stellung so auf Druck belastet ist, dass ihre daraus resultierende Federkraft die notwendige Anpresskraft zur sicheren Aufnahme der Last 40 aufbringt.

Da die Druckfeder 50 auf den zwei an den U-Trägern befestigten Platten 90 aufliegt, überträgt sie ihre Federkraft nach oben auf die Mutter 150, wodurch wiederum eine nach oben gerichtete Zugkraft auf die Gewindestange 140 und das Gestänge 10 übertragen wird. Diese Zugkraft wird über die Arme 20 als Anpresskraft auf die Greifbacken 30 übertragen, die dadurch die Last 40 halten. Die Feder 50 ist in der offenen Stellung der Greifbacken auf Druck vorgespannt. Diese Vorspannkraft der Druckfeder ist so dimensioniert, dass eine sichere und dauerhafte Anpresskraft gewährleistet ist.

Handelt es sich bei der Last beispeilsweise um ein radioaktives Bauteil eines Kernreaktors, kann dieses also in einigen Metern Tiefe im Wasser ergriffen und aus dem Reaktor herausbewegt werden. Die gesamte Vorrichtung kann dazu an der Augenmutter 160 an einen Kran gehängt werden, und die Last kann sicher an einen geeigneten Ort bewegt werden. Dabei kann es sich beispielsweise um Fässer zur Aufbewahrung radioaktiver Teile handeln. Zum Lösen der Last wird die Mutter 150 wieder gelöst, und die Greifbacken 30 geben das Objekt 40 frei, ohne dass sich der Anwender der Vorrichtung unmittelbar in der Nähe der radioaktiven Bauteile aufhalten muss.

Die Vorrichtung kann nicht nur zur Aufnahme radioaktiver Bauteile in Kernreaktoren verwendet werden, sondern sie eignet sich zur Aufnahme jeglicher Lasten, die auf große Entfernungen und in Umgebungen mit engen Abmessungen ergriffen werden müssen. Dazu kann die Vorrichtung für verschiedene Formen und Gewichte der Lasten modifiziert werden, indem beispielsweise die Greifbacken und die Vorspannkraft der Druckfeder den jeweiligen Anforderungen angepasst werden.

## Patentansprüche

1. Verfahren zur Aufnahme von Lasten mittels kraftbetätigbarer Greifbacken, **dadurch gekennzeichnet, dass** die Bewegung eines Gestänges (10) über wenigstens zwei scherenförmig positionierte Arme (20) auf wenigstens zwei Greifbacken (30) übertragen wird, wobei eine auf das Gestänge (10) wirkende Zugkraft als Anpresskraft auf die Greifbacken (30) übertragen wird.

2. Verfahren nach Anspruch 1, **dadurch gekennzeichnet, dass** die Zugkraft durch eine Feder (50) erzeugt wird.

3. Verfahren nach Anspruch 2, **dadurch gekennzeichnet, dass** die Feder (50) eine Druckfeder ist.

4. Verfahren nach einem oder beiden der Ansprüche 2 oder 3, **dadurch gekennzeichnet, dass** die Feder (50) vorgespannt ist.

5. Verfahren nach einem oder mehreren der Ansprüche 1 bis 4, **dadurch gekennzeichnet, dass** die Bewegung des Gestänges (10) über das Drehen einer Mutter (150) auf einer mit dem Gestänge (10) verbundenen Gewindestange (140) erfolgt.

6. Verfahren nach einem oder mehreren der Ansprüche 1 bis 5, **dadurch gekennzeichnet, dass** die Bewegung der Greifbacken (30) zum Greifen der Last (40) durch Bewegung des Gestänges (10) bewirkt wird, während die erforderliche Anpresskraft zum Halten der Last (40) zwischen den Greifbacken (30) durch das Aufbringen einer Zugkraft auf das Gestänge (10) bewirkt wird.

7. Vorrichtung zur Aufnahme von Lasten mittels kraftbetätigbarer Greifbacken, **dadurch gekennzeichnet, dass** ein bewegbares Gestänge (10) über wenigstens zwei scherenförmig positionierte Arme (20) mit wenigstens zwei Greifbacken (30) verbunden ist, wobei durch ein krafterzeugendes Mittel eine Zugkraft auf das Gestänge (10) übertragbar ist.

8. Vorrichtung nach Anspruch 7, **dadurch gekennzeichnet, dass** das Gestänge (10), die Arme (20) und die Greifbacken (30) so angeordnet sind, dass eine auf das Gestänge wirkende Zugkraft als Anpresskraft auf die Greifbacken (30) übertragen wird.

9. Vorrichtung nach einem oder beiden der Ansprüche 7 und 8, **dadurch gekennzeichnet, dass** die Arme (20) beweglich mit dem Gestänge (10) verbunden sind.

10. Vorrichtung nach Anspruch 9, **dadurch gekennzeichnet, dass** die Verbindung der Arme (20) mit dem Gestänge (10) eine Stiftverbindung ist.

11. Vorrichtung nach einem oder mehreren der Ansprüche 7 bis 10, **dadurch gekennzeichnet, dass** die Arme (20) beweglich mit zwei Trägern (60) und (70) verbunden sind, an denen die Greifbacken (30) befestigt sind.

12. Vorrichtung nach Anspruch 11, **dadurch gekennzeichnet, dass** die zwei Träger (60) und (70) U-Träger sind, die sich mit ihren offenen Seiten gegenüberliegen.

13. Vorrichtung nach einem oder mehreren der Ansprüche 7 bis 12, **dadurch gekennzeichnet, dass** die Greifbacken (30) auswechselbar sind.

14. Vorrichtung nach einem oder mehreren der Ansprüche 7 bis 13, **dadurch gekennzeichnet, dass** die Greifbacken (30) im Wesentlichen quaderförmig sind.

15. Vorrichtung nach einem oder mehreren der Ansprüche 7 bis 14, **dadurch gekennzeichnet, dass** die Greifbacken (30) zur Erhöhung des Reibungskoeffizienten Querriefen aufweisen.

16. Vorrichtung nach einem oder mehreren der Ansprüche 7 bis 15, **dadurch gekennzeichnet, dass** die Greifbacken (30) hakenförmig sind.

17. Vorrichtung nach einem oder mehreren der Ansprüche 7 bis 16, **dadurch gekennzeichnet, dass** die Arme (20) Platten sind.

18. Vorrichtung nach einem oder mehreren der Ansprüche 7 bis 17, **dadurch gekennzeichnet, dass** das Gestänge (10) mit einer Gewindestange (140) verbunden ist, auf die eine Mutter (150) geschraubt ist.

19. Vorrichtung nach einem oder mehreren der Ansprüche 7 bis 18, **dadurch gekennzeichnet, dass** die Mutter (150) eine Nut (180) aufweist.

20. Vorrichtung nach einem oder mehreren der Ansprüche 7 bis 19, **dadurch gekennzeichnet, dass** die zwei Träger (60) und (70) die Ummantelung der Vorrichtung bilden, in der sich ein Gestänge (10), Arme (20), Teile der Greifbacken (30), eine Gewindestange (140), eine Feder (50), ein Anschlag (80) für die Mutter und ein Anschlag (90) für die Feder (50) befinden.

21. Vorrichtung nach einem oder mehreren der Ansprüche 7 bis 20, **dadurch gekennzeichnet, dass** der Anschlag (90) für die Feder (50) aus zwei Platten gebildet wird, die jeweils fest mit einem der Träger (60) und (70) verbunden sind.

22. Vorrichtung nach einem oder mehreren der Ansprüche 7 bis 21, **dadurch gekennzeichnet, dass** die Feder (50) eine Druckfeder ist.

23. Vorrichtung nach einem oder mehreren der Ansprüche 7 bis 22, **dadurch gekennzeichnet, dass** sich die Feder (50) zwischen einem Anschlag (90) und der Mutter (150) erstreckt, wobei sie die Gewindestange (140) umgibt.

24. Vorrichtung nach einem oder mehreren der Ansprüche 7 bis 23, **dadurch gekennzeichnet, dass** der Anschlag (80) für die Mutter (150) aus zwei Platten gebildet wird, die fest mit jeweils einem der Träger (60) und (70) verbunden sind.

25. Vorrichtung nach einem oder mehreren der Ansprüche 7 bis 24, **dadurch gekennzeichnet, dass** die Nut (180) der Mutter (150) bei offener Stellung der Greifbacken (30) ohne Last (40) den Anschlag (80) auf der Seite berührt, die zur Feder (50) weist.

26. Vorrichtung nach einem oder mehreren der Ansprüche 7 bis 25, **dadurch gekennzeichnet, dass** die Nut (180) der Mutter (150) bei geschlossener Stellung der Greifbacken (30) mit aufgenommener Last (40) den Anschlag (80) auf der Seite berührt, die von der Feder (50) wegweist.

27. Vorrichtung nach einem oder mehreren der Ansprüche 7 bis 26, **dadurch gekennzeichnet, dass** die Länge der Vorrichtung mehr als einen Meter beträgt.

28. Vorrichtung nach einem oder mehreren der Ansprüche 7 bis 27, **dadurch gekennzeichnet, dass** die Vorrichtung 2 bis 20 cm breit und tief ist.

29. Vorrichtung nach einem oder mehreren der Ansprüche 7 bis 28, **dadurch gekennzeichnet, dass** auf das Ende der Gewindestange (140), welches nicht mit dem Gestänge (10) verbunden ist, eine Augenmutter (160) zum Greifen und Aufhängen der Vorrichtung geschraubt ist.

30. Vorrichtung nach einem oder mehreren der Ansprüche 7 bis 29, **dadurch gekennzeichnet, dass** an den Trägern (60) und (70) Stangen (170) zum Bewegen und Fixieren der Vorrichtung befestigt sind.
